# EUROPÄISCHE PATENTANMELDUNG

(11) **EP 0 700 224 A2**
(43) Veröffentlichungstag der Anmeldung: **06.03.1996**
(21) Anmeldenummer: 95113122.6
(22) Anmeldetag: 21.08.1995
(51) Int. Cl.: H04Q 3/66, H04L 12/56

(54) **Verfahren zur adaptiven Wegesuche in einem Kommunikationsnetz**

(30) Priorität: 31.08.1994 DE 4430993
(71) Anmelder: SIEMENS AKTIENGESELLSCHAFT, D-80333 München (DE)
(72) Erfinder: Thanner, Thomas, Dr.-Ing., D-80798 München (DE); Weber, Gerhard, Dipl.-Math., D-81667 München (DE); Sitter, Wolfgang, Dipl.-Ing., D-81379 München (DE)

(57) **Zusammenfassung**

Das Kommunikationsnetz weist eine Mehrzahl untereinander verbundener Netzknoten (NK1,...,NK5) auf, in welchen jeweils Netzdaten bezüglich der Netztopologie des gesamten Kommunikationsnetzes geführt sind und nach Maßgabe dieser Netzdaten Wegesuchtabellen für Verbindungswege zu sämtlichen verbleibenden Netzknoten erstellt werden. Bei Auftreten eines die Netztopologie des Kommunikationsnetzes beeinflussenden Ereignisses werden durch den dieses Ereignis erkennenden Netzknoten einerseits die in diesem geführten Netzdaten aktualisiert. Andererseits wird zu den anderen Netzknoten hin eine dem Ereignis entsprechende Rundsende-Nachricht übertragen, auf deren Empfang hin durch den jeweiligen Netzknoten eine Aktualisierung der in diesem geführten Netzdaten durchgeführt wird. Dabei ist vorgesehen, daß für die Übertragung der Rundsende-Nachricht innerhalb des Kommunikationsnetzes aus der Vielzahl der möglichen Verbindungswege zwischen den einzelnen Netzknoten ein Verbindungswege-Netz festgelegt ist, über welches die Rundsende-Nachricht den jeweiligen Netzknoten über lediglich eine festgelegte Anzahl von unabhängigen Verbindungswegen erreicht.

## Beschreibung

Wegesuchverfahren haben in der Vermittlungstechnik die Aufgabe, unter Berücksichtigung der Topologie eines Kommunikationsnetzes Verbindungen zwischen den einzelnen Netzknoten (Vermittlungseinrichtungen) zu ermitteln. Verbindungen zwischen einem Ursprungsknoten und einem Zielknoten werden dabei als Punkt-zu-Punkt-Verbindungen bezeichnet. Die ermittelten Punkt-zu-Punkt-Verbindungen sollten optimal hinsichtlich eines festgelegten Optimierungskriteriums sein. Eine Verbindung von einem Ursprungsknoten zu einer Mehrzahl von Zielknoten eines Kommunikationsnetzes wird dagegen als "Broadcast"-Verbindung bezeichnet.

Die Wegesuchverfahren in Kommunikationsnetzen lassen sich prinzipiell in zwei verschiedene Arten von Suchverfahren klassifizieren, nämlich nicht-adaptive Wegesuchverfahren und adaptive Wegesuchverfahren. Nicht-adaptive Wegesuchverfahren ermitteln dabei Verbindungen auf der Basis statischer Tabellen, berücksichtigen jedoch keine Lastzustände oder Änderungen in der Topologie des Kommunikationsnetzes. Im Falle von Zustandsänderungen des Konmunikationsnetzes ermitteln diese nicht-adaptiven Wegesuchverfahren anhand der statischen Tabellen, die wahrend der Systemgenerierung erstellt und in der Regel durch Operatoreingaben geändert werden, Verbindungen über zuvor definierte alternative Wege. Dies wird auch als dynamisches Routing bezeichnet.

Adaptive Wegesuchverfahren passen sich dagegen Zustandsänderungen des Kommunikationsnetzes an. Verschiedene Parameter, wie z.B. Lastverhältnisse, Leitungs- und Leitungsbündelzustände, werden dabei berücksichtigt. Die adaptiven Wegesuchverfahren lassen sich weiter in zentrale und verteilte Wegesuchverfahren klassifizieren.

Zentrale Wegesuchverfahren benötigen ein Kontrollzentrum, welches prinzipiell Transportverbindungen zu allen Netzknoten des Kommunikationsnetzes unterhält. Die einzelnen Netzknoten senden Informationen über den aktuellen Zustand des Kommunikationsnetzes zu dem Kontrollzentrum. Dort erfolgt eine zentrale Datenhaltung und Neuermittlung der für die Wegesuche benötigten Tabellen. Die aus einer Neuermittlung resultierenden Änderungen der Wegesuchtabellen werden dann an die einzelnen Netzknoten verteilt. Der Vorteil eines Kontrollzentrums besteht darin, daß die Netzknoten des Kommunikationsnetzes von zeitaufwendigen Optimierungen entlastet werden. Ein Nachteil dieses Konzeptes besteht jedoch darin, daß bei Ausfall des Kontrollzentrums keine Änderungen in den Wegesuchtabellen mehr durchgeführt werden können. Weiterhin erfordert die Übertragung der Wegesuchtabellen erhebliche Übertragungskapazitäten, was sich auf die Leistungsfähigkeit des Kommunikationsnetzes auswirken kann.

Bei verteilten Wegesuchverfahren führt jeder Netzknoten des Kommunikationsnetzes die Optimierungsermittlung zur Anpassung seiner Wegesuchtabellen selbst durch. Zu diesem Zweck werden Informationen über den Zustand des Kommunikationsnetzes ausgetauscht. Die verteilten Wegesuchverfahren können weiterhin hinsichtlich ihrer Datenhaltung unterschieden werden. Einerseits sind dies Verfahren, bei denen die gesamte Topologie des Kommunikationsnetzes in jedem der Netzknoten bekannt ist. Andererseits sind dies Verfahren, bei denen lediglich die unmittelbare Nachbarschaft der einzelnen Netzknoten bekannt ist.

Je nach der Datenhaltung in den einzelnen Netzknoten sind unterschiedliche Verfahren zum Informationsaustausch über den aktuellen Zustand des Kommunikationsnetzes notwendig. Die Kenntnis der vollständigen Topologie des Kommunikationsnetzes ermöglicht gegenüber den anderen Verfahren umfangreiche Optimierungen mit unterschiedlichen Zielsetzungen. Treten Änderungen des aktuellen Netzzustandes ein, so wird bei verteilten Wegesuchverfahren, die die gesamte Topologie des Kommunikationsnetzes kennen, zunächst eine Aktualisierung der Datenbasen in allen Netzknoten vorgenommen. Zur Verteilung der neu ermittelten Daten im Kommunikationsnetz zu allen Netzknoten wird ein "Broadcast"-Verfahren eingesetzt. Anschließend fuhrt jeder Netzknoten unter Berücksichtigung der neuen Daten eine Optimierung der zu den übrigen Netzknoten (Zielknoten) möglichen Wege im Kommunikationsnetz durch, um Punkt-zu-Punkt-Verbindungen zu optimieren.

Es ist nun Aufgabe der vorliegenden Erfindung, einen Weg zu zeigen, wie bei einem adaptiven, verteilten Wegesuchverfahren insbesondere die Kommunikation zwischen den einzelnen Netzknoten zur Aktualisierung der in diesen jeweils festgehaltenen Netzdaten optimiert werden kann.

Gelöst wird diese Aufgabe durch die im Patentanspruch 1 angegebenen Verfahrensmerkmale. Die Erfindung bringt dabei den Vorteil mit sich, daß eine von einem Netzknoten abzugebende Rundsende-Nachricht nicht über sämtliche von diesem Netzknoten abgehende Leitungsbündel übertragen wird, sondern daß für eine Reduzierung der Anzahl von verteilten identischen Rundsende-Nachrichten innerhalb des Kommunikationsnetzes aus der Vielzahl der möglichen Verbindungswege zwischen den einzelnen Netzknoten ein Verbindungswege-Netz festgelegt wird, über welches die Rundsende-Nachricht den jeweiligen Netzknoten über lediglich eine festgelegte Anzahl von unabhängigen Verbindungswegen erreicht. Damit ist die Anzahl von innerhalb des Kommunikationsnetzes übertragenen identischen Rundsende-Nachrichten wesentlich reduziert, wobei jedoch auch bei Ausfall einzelner Verbindungswege eine ausreichende Redundanz gegeben ist.

Gemäß Patentanspruch 2 besteht eine zweckmäßige Ausgestaltung des Verfahrens gemäß der vorliegenden Erfindung darin, daß eine Rundsende-Nachricht dem jeweiligen Netzknoten lediglich über zwei unabhängige Verbindungswege zugeführt wird. Damit ist die Anzahl der innerhalb des Kommunikationsnetzes übertragenen identischen Rundsende-Nachrichten mit einer im allgemeinen ausreichenden Redundanz weiter reduziert.

Zweckmäßigerweise wird gemäß Patentanspruch 3 eine Anpassung der in den einzelnen Netzknoten erstellten Wegesuchtabellen nach Maßgabe aktualisierter Netzdaten erst nach Ablauf einer festgelegten Zeitspanne durchgeführt. Damit wird erreicht, daß kurzfristig auftretende Zustandsänderungen in der Topologie des Kommunikationsnetzes bei der Optimierung der Wegesuchtabellen ausgeschlossen werden.

Eine weitere zweckmäßige Ausgestaltung der vorliegenden Erfindung besteht gemäß Patentanspruch 4 darin, daß bei einer Zustandsänderung einer Leitung eines Leitungsbündels, durch welche sich die Übertragungskapazität dieses Leitungsbündels ändert, eine Optimierung der Wegesuchtabellen lediglich dann erfolgt, wenn die Änderung einen bestimmten Schwellwert überschreitet.

Schließlich besteht eine weitere zweckmäßige Ausgestaltung der Erfindung gemäß Patentanspruch 5 darin, daß das adaptive Wegesuchverfahren lediglich bei einer Topologieänderung des Kommunikationsnetzes für eine Aktualisierung der Wegesuchtabellen benutzt wird, während für den Aufbau von Verbindungen innerhalb des Kommunikationsnetzes ein nicht-adaptives Wegesuchverfahren auf der Grundlage der adaptiv geänderten Wegesuchtabellen durchgeführt wird.

Im folgenden wird die vorliegende Erfindung anhand von Zeichnungen beispielsweise näher erläutert.
- FIG 1: zeigt in schematischer Form ein Kommunikationsnetz, bei welchem die vorliegende Erfindung angewandt ist,
- FIG 2: zeigt ein Flußdiagramm, auf welches im folgenden noch näher eingegangen wird, und
- FIG 3: zeigt einen möglichen Aufbau eines der in FIG 1 lediglich schematisch dargestellten Netzknoten.

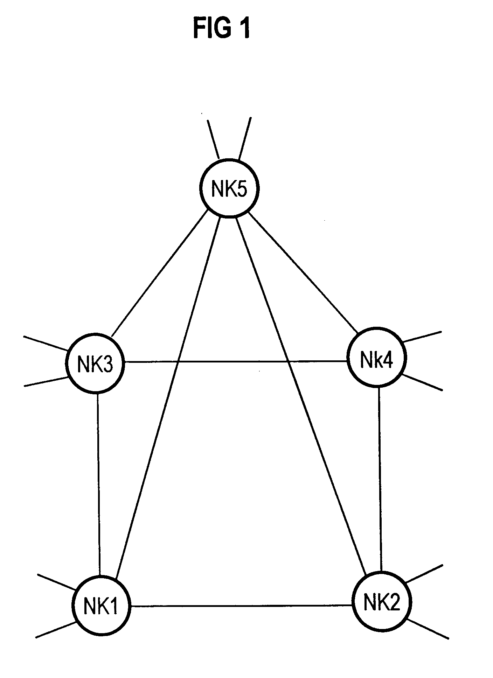

In FIG 1 ist in schematischer Form ein Kommunikationsnetz dargestellt, welches aus einer Mehrzahl von miteinander verbundenen Netzknoten (Vermittlungseinrichtungen) gebildet sein möge. Von diesen Netzknoten sind dabei lediglich die Netzknoten NK1, NK2, NK3, NK4 und NK5 angegeben. Bei diesem Kommunikationsnetz möge es sich beispielsweise um ein paketvermittelndes Datennetz für die Übertragung von Text und Daten handeln. In einem solchen Datennetz erfolgt die Übertragung von Daten nach dem Prinzip der Speichervermittlung. Die zu übertragenden Daten werden in einer Ursprungsstelle zerlegt und paketweise zu einer in Frage kommenden Gegenstelle (Zielstelle) übertragen. Wahrend der Übertragung innerhalb des Kommunikationsnetzes erfolgt eine Zwischenspeicherung der einzelnen Datenpakete in den an der Übertragung beteiligten Netzknoten. In der Gegenstelle (Zielstelle) werden die einzelnen Datenpakete in Empfang genommen und wieder zu dem ursprünglichen Datenstrom zusammengesetzt. Die zu übertragenden generierten Pakete enthalten dabei neben den eigentlichen Nutzinformationen zusätzliche Steuerinformationen beispielsweise in Form eines Paketkopfes, die zur Behandlung und Weiterleitung der Pakete durch die einzelnen Netzknoten benötigt werden.

Die Übertragung der Datenpakete erfolgt abschnittweise von einem Netzknoten zum nächsten Netzknoten, in welchem die Datenpakete bis zum erneuten Aussenden zwischengespeichert werden. Die Datenpakete verschiedener Datenströme werden im Zeitmultiplex verschachtelt, so daß eine physikalische Verbindung gleichzeitig für mehrere Datenströme verwendet werden kann. Zwischen zwei Teilnehmereinrichtungen des Kommunikationsnetzes liegt also keine Durchschalteverbindung, sondern eine sogenannte virtuelle Verbindung vor. Die zu einer solchen virtuellen Verbindung gehörenden Datenpakete weisen dabei in ihrem zugehörigen Zellenkopf jeweils eine diese virtuelle Verbindung bezeichnende virtuelle Kanalnummer auf. Der Weg für die jeweilige virtuelle Verbindung über die einzelnen Netzknoten des Kommunikationsnetzes wird im Zuge eines Verbindungsaufbaus festgelegt. Die in der anschließenden Datentransferphase, d.h. nach erfolgtem Verbindungsaufbau, ausgesendeten Datenpakete folgen dann genau dem in der Verbindungsaufbauphase definierten Weg.

In dem in FIG 1 dargestellten Kommunikationsnetz wird zum Aufbau einer virtuellen Verbindung in den einzelnen Netzknoten ein Wegesuchverfahren durchgeführt, auf welches im folgenden näher eingegangen wird.

In dem Kommunikationsnetz wird zur Wegesuche in den einzelnen Netzknoten ein dynamisches, oben bereits erwähntes Wegesuchverfahren angewandt. Dieses Verfahren basiert auf einem Satz statischer Tabellen, nämlich einem Rufnummernbaum und den Richtungswahltabellen. Diese Tabellen werden zunächst im Rahmen der Systemgenerierung zusammengestellt. Die einzelnen Netzknoten werden dabei zu Gruppen zusammengefaßt. Für jede Gruppe, die auch als Richtung bezeichnet ist, wird eine Richtungswahltabelle definiert. In einer solchen Richtungswahltabelle ist die Reihenfolge festgelegt, mit der die zur Verfügung stehenden Leitungsbündel und damit die zugehörigen Nachbarknoten bei einem Verbindungsaufbau ausgewählt werden. Das erste Element einer Richtungswahltabelle wird dabei als Erstweg bezeichnet, die nachfolgenden dagegen als Alternativwege.

Beim Aufbau einer Verbindung erfolgt eine Auswertung der diese Verbindung bezeichnenden Rufnummer anhand des Rufnummernbaumes. Das Ergebnis dieser Auswertung ist ein Verweis auf eine dieser Rufnummer zugeordnete Richtungswahltabelle. Mittels dieser Richtungswahltabelle wird beginnend mit dem Erstweg ein abgehendes Leitungsbündel ausgewählt. Das dynamische Wegesuchverfahren ist dabei so konzipiert, daß bei Leitungsbündelausfallen auf die definierten Alternativwege ausgewichen wird, wie sie durch die Reihenfolge in der Richtungswahltabelle vorgegeben sind.

Zusätzlich zu diesem dynamischen Wegesuchverfahren wird bei dem vorliegenden Ausführungsbeispiel in den einzelnen Netzknoten als paralleler Prozeß ein adaptives Wegesuchverfahren durchgeführt. Beide Prozesse laufen dabei unabhängig voneinander ab. Das dynamische Wegesuchverfahren wird, wie zuvor erläutert, beim Aufbau von Verbindungen aktiviert, während das adaptive Wegesuchverfahren bei Topologieänderungen innerhalb des Kommunikationsnetzes zur Aktualisierung der Wegesuchtabellen dient. Die gemeinsame Schnittstelle der beiden Prozesse besteht aus den Richtungswahltabellen. Das dynamische Wegesuchverfahren greift auf die Richtungswahltabellen lediglich lesend zu, wahrend das adaptive Wegesuchverfahren diese verändert. Die Reihenfolge der abgehenden Leitungsbündel in den Richtungswahltabellen wird von dem adaptiven Wegesuchverfahren im Fall von Topologieänderungen innerhalb des Kommunikationsnetzes gemäß den Ergebnissen einer durchgeführten Optimierungsermittlung angepaßt. Bei einer späteren, erneuten Aktivierung des dynamischen Wegesuchverfahrens im Zuge des Aufbaus einer Verbindung werden dann die geänderten Richtungswahltabellen verwendet.

Wie bereits zuvor erwähnt, erfolgt in dem in FIG 1 dargestellten Kommunikationsnetz ein verteiltes adaptives Wegesuchverfahren, bei welchem jeder Netzknoten die vollständige Topologie des Kommunikationsnetzes kennt. Diese Topologie wird dabei durch einen Graphen modelliert. Die Netzknoten werden in Knoten, die Leitungsbündel in Kanten des Graphen abgebildet. Jedes Leitungsbündel wird durch ein Kantengewicht charakterisiert, das für die Ermittlung des Optimierungskriteriums verwendet wird. Dieses Kantengewicht wird als "Quality of Service" (QOS) bezeichnet. Der QOS für ein Leitungsbündel ist indirekt proportional zur Summe der Übertragungsgeschwindigkeiten der zu diesem Leitungsbündel gehörenden Leitungen.

Das gesamte Kommunikationsnetz wird in ein Hauptnetz ("Backbone"-Netz) und mehrere Zubringernetze ("Access"-Netze) strukturiert. Die Zubringernetze umfassen eine geringere Anzahl der weniger leistungsfähigen Netzknoten. Diese Strukturierung ist aufgrund von Speicherplatz- und Laufzeitanforderungen zweckmäßig. Die von den Optimierungsverfahren benötigte Rechenzeit ist von der Anzahl der Netzknoten in dem Kommunikationsnetz abhängig und muß von leistungsfähigen und weniger leistungsfähigen Netzknoten in gleicher Weise erbracht werden. Eine Begrenzung der Anzahl der Netzknoten für die Optimierungsverfahren ist deshalb notwendig und durch die Strukturierung in ein Hauptnetz und Zubringernetze erreicht.

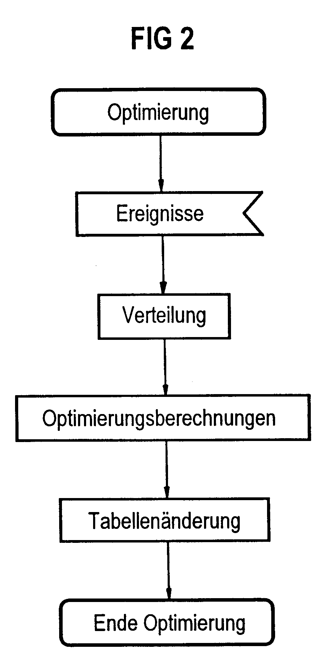

In FIG 2 ist ein Flußdiagramm für die Optimierung im Zuge der adaptiven Wegesuche dargestellt. Das adaptive Wegesuchverfahren ist bei dem vorliegenden Kommunikationsnetz ein ereignisgesteuertes System. Der Eintritt eines für das adaptive Wegesuchverfahren relevanten Ereignisses wird von den beteiligten Netzknoten erkannt. Daraufhin wird eine Bewertung vorgenommen und eine Verteilung der daraus resultierenden Netzdaten im gesamten Kommunikationsnetz angestoßen. Anschließend wird abhängig von dem Ereignis in dem jeweiligen Netzknoten eine Optimierungsberechnung ausgeführt, durch welche die Richtungswahltabellen gemäß den Optimierungsergebnissen geändert werden. Der Ablauf der Optimierung ist dabei unabhängig davon, ob das Ereignis an dem jeweiligen Netzknoten selbst eintritt oder dieser durch den Verteilungsmechanismus über ein bestimmtes Ereignis in Kenntnis gesetzt wird. Auftretende Ereignisse stoßen eine ereignisspezifische Bearbeitung an. Der Anstoß zur Bearbeitung erfolgt verzögert, um kurzfristig auftretende Zustandsänderungen gezielt von der Optimierung auszuschließen. Dabei werden folgende Ereignisse bearbeitet:
- Zustandsänderungen einer Leitung, d.h. Betriebsbereitschaft oder Ausfall einer Leitung
- Zustandsänderungen eines Leitungsbündels, d.h. Betriebsbereitschaft oder Ausfall eines Leitungsbündels
- Hinzuschalten eines neuen Netzknotens zu dem Kommunikationsnetz und
- Ausfall eines Netzknotens.

Leitungsbündel werden, wie bereits oben erwähnt, durch ihren "Quality of Service" (QOS) charakterisiert, welcher aus der Summe der QOS der einzelnen Leitungen des Leitungsbündels gebildet wird. Bei einer Zustandsänderung einer Leitung, d.h. bei Betriebsbereitschaft oder Ausfall, verändert sich der QOS des zugehörigen Leitungsbündels. In dem das Kommunikationsnetz modellierenden Graphen wird das Gewicht der dem Leitungsbündel entsprechenden Kante geändert. Ein Anstoß der Optimierungsberechnungen erfolgt dabei lediglich dann, wenn die Änderung einen festgelegten Schwellwert überschreitet.

Zustandsänderungen von Leitungsbündeln, d.h. Betriebsbereitschaft oder Ausfall, resultieren im Einfügen oder Löschen der entsprechenden Kante im Graphenmodell des Kommunikationsnetzes. Beim Hinzuschalten eines neuen Netzknotens zum Kommunikationsnetz wird dieser allen bereits existierenden Netzknoten bekannt gemacht. Der hinzugeschaltete Netzknoten und die zugehörigen neuen Leitungsbündel werden in den Graphen eingefügt. Der Ausfall eines Netzknotens wird in entsprechender Weise gehandhabt. Anschließend wird in den einzelnen Netzknoten jeweils eine Optimierungsberechnung gestartet.

Die Verteilung der sich aus einem Ereignis ergebenden Informationen innerhalb des Kommunikationsnetzes erfolgt nach einem "Broadcast"-Verfahren. Dabei wird eine möglichst schnelle Verbreitung der Informationen im gesamten Kommunikationsnetz angestrebt, um die in jedem Netzknoten existierende Datenbasis netzweit konsistent zu halten. Zu diesem Zweck werden empfangene Rundsende-Nachrichten sofort wieder ausgesendet, bevor Optimierungsberechnungen in dem jeweiligen Netzknoten gestartet werden.

Die Verteilung einer Rundsende-Nachricht im gesamten Kommunikationsnetz, d.h. an alle Netzknoten, kann nach unterschiedlichen Verfahren erfolgen. Ein mögliches Verfahren ist das sogenannte "Flooding"-Verfahren, bei dem eine empfangene Rundsende-Nachricht auf alle Leitungsbündel, außer dem Leitungsbündel, auf dem die Rundsende-Nachricht empfangen wurde, wieder ausgesendet wird. Dieses Verfahren ist zwar sehr sicher. Die Anzahl der verteilten identischen Rundsende-Nachrichten ist jedoch sehr hoch.

Ein weiteres mögliches Verfahren ist das "Spanning Tree"-Verfahren, bei welchem ein Baum ermittelt wird, der garantiert, daß genau ein Weg zwischen je zwei Netzknoten besteht. Der Baum umfaßt alle Netzknoten des Kommunikationsnetzes. Empfangene Rundsende-Nachrichten werden nur auf den Leitungsbündeln wieder ausgesendet, die zum "Spanning Tree" gehören. Bei diesem Verfahren ist die Anzahl der verteilten identischen Rundsende-Nachrichten zwar wesentlich geringer als bei dem zuvor genannten Verfahren, jedoch treten Verteilprobleme dann auf, wenn ein Leitungsbündel des "Spanning Tree" ausfällt.

Bei dem vorliegenden Ausführungsbeispiel wird für die Verteilung von Rundsende-Nachrichten ein "Broadcast Subgraph" berechnet. Dieser garantiert, daß zwischen jedem Knotenpaar lediglich eine festgelegte Anzahl voneinander unabhängiger Wege, im Graphenmodell keine gemeinsamen Kanten und Knoten, berechnet werden. Im vorliegenden Ausführungsbeispiel ist die Anzahl der voneinander unabhängigen Wege mit zwei festgelegt, so daß eine ausreichende Redundanz bei Ausfall eines Leitungsbündels gegeben ist. Die Anzahl der identischen Rundsende-Nachrichten ist gegenüber dem "Flooding"-Verfahren erheblich reduziert, wobei die Nachteile des "Spanning Tree"-Verfahrens vermieden sind. Die Berechnung des "Broadcast Subgraph" basiert dabei auf einem minimalen "Spanning Tree", um eine möglichst schnelle Verteilung einer Rundsende-Nachricht zu garantieren. Der "Spanning Tree" wird durch Hinzunahme von Kanten zu einem Graphen mit den beschriebenen Eigenschaften ergänzt. Die hinzuzufügenden Kanten werden dem das Kommunikationsnetz modellierenden Graphen entnommen.

Sobald ein Netzknoten die Weiterleitung einer eingetroffenen Rundsende-Nachricht abgeschlossen hat, werden die empfangenen Informationen in die Datenbasis eingefügt und Optimierungsberechnungen angestoßen. Zur Optimierung wird eine modifizierte Form des "kürzesten Pfad"-Verfahrens nach Dijkstra verwendet. Dieses Verfahren ermittelt die kürzesten Pfade von einem Ursprungsknoten, d.h. dem Netzknoten, der die Berechnung ausführt, zu allen anderen Netzknoten im Kommunikationsnetz. Der kürzeste Pfad ergibt sich als die minimale Summe aller Kantengewichte (QOS) vom Ursprungsknoten zu einem Zielknoten. Bei dem modifizierten Verfahren werden k mit k=4, kürzeste Pfade mit der Eigenschaft berechnet, daß die am Ursprungsknoten abgehenden Kanten der k kürzesten Pfade unterschiedlich sind. Dadurch ist sichergestellt, daß bei Ausfall eines Leitungsbündels am Ursprungsknoten der nächstbessere kürzeste Pfad ausgewählt werden kann. Die benötigte Ermittlungszeit von k kürzesten Pfaden von einem Ursprungsknoten zu allen übrigen Netzknoten ist abhängig von der Komplexität des Kommunikationsnetzes. Diese Komplexität erfordert unter Umständen eine Reduzierung der maximalen Knotenanzahl, die durch die oben erwähnte Strukturierung in ein Hauptnetz und Zubringernetze erreicht wird. Nach Abschluß der Optimierungsberechnungen werden die Richtungswahltabellen entsprechend den ermittelten Ergebnissen geändert.

Die Dauer der Verteilung einer Rundsende-Nachricht sowie die für die Optimierungsberechnung benötigte Zeit hängen von der dynamischen Belastung der einzelnen Netzknoten ab. Daraus ergibt sich ein zeitliches Fenster, Abschlußzeitpunkt der Optimierungsberechnungen zwischen dem ersten und letzten Netzknoten, in welchem die Wegesuchtabellen netzweit nicht konsistent sind. Während dieses zeitlichen Fensters kann es deshalb beim Aufbau von Verbindungen zu Schleifen kommen. Schleifen entstehen, wenn einer der in der Verbindungsaufbauphase traversierten Netzknoten ein zweites Mal ausgewählt wird. Die Verbindungsaufbauphase wird in diesem Fall abgebrochen und der jeweilige Ruf ausgelöst. Sobald der letzte Netzknoten seine Optimierungsberechnungen beendet hat, sind die Wegesuchtabellen netzweit wieder konsistent.

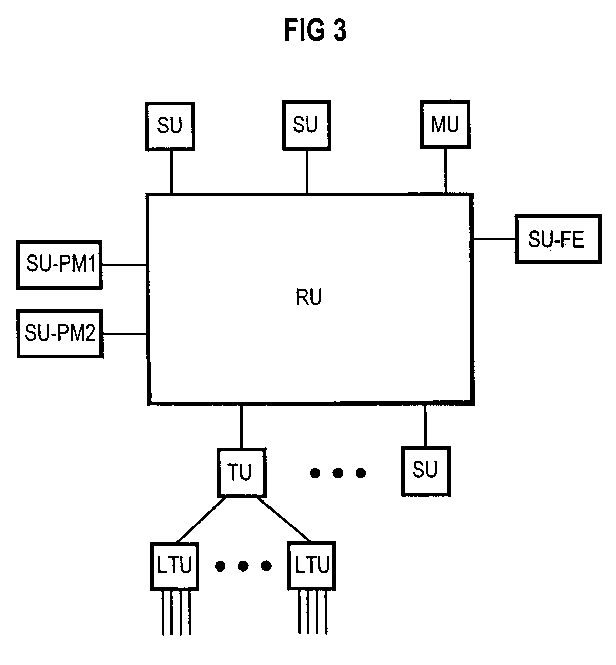

In FIG 3 ist ein möglicher Aufbau der zuvor erwähnten Netzknoten dargestellt. Danach ist jeder Netzknoten aus einem Ringleitungssystem RU gebildet, an welches unter anderem Einheiten SU ("Switching Unit") angeschlossen sind, die die Rufbehandlung und die Wegesuche durchführen. Der Vermittlungsbetrieb wird von diesem Einheiten in Lastteilung abgewickelt. Darüber hinaus sind mit diesem Ringleitungssystem weitere Einheiten TU verbunden, an welche mit Leitungen verbundene Leitungsanschlußeinheiten LTU angeschlossen sind. Für das zuvor erläuterte adaptive Wegesuchverfahren werden aus den in einem Netzknoten vorhandenen Einheiten SU zwei ausgewählt, die in FIG 3 mit SU-PM1 und SU-PM2 bezeichnet sind. SU-PM1 und SU-PM2 führen die für das adaptive Wegesuchverfahren notwendigen Aufgaben parallel zum Vermittlungsbetrieb durch. Sie sind unterschiedlich hinsichtlich der von ihnen durchzuführenden Aufgaben. Die mit SU-PM1 bezeichnete Einheit führt als aktive Einheit alle Kommunikationen mit den anderen Netzknoten im Netz, die internen Kommunikationen im Netzknoten und die Optimierungsberechnungen aus. Die Einheit SU-PM2, die im "Stand-by"-Betrieb arbeitet, aktualisiert lediglich ihre Datenbasis für das adaptive Wegesuchverfahren, um bei einem Ausfall der Einheit SU-PM1 deren Aufgaben übernehmen zu können.

Wie gerade erwähnt, übernimmt die Einheit SU-PM1 die externe Kommunikation mit den anderen Netzknoten im Kommunikationsnetz. Diese externe Kommunikation umfaßt dabei auch den Informationsaustausch bei einem Knotenhochlauf und die Verteilung der Rundsende-Nachrichten.

Bei einem Knotenhochlauf wird der aktiven Einheit SU-PM1 im hochlaufenden Netzknoten die bereits existierende Topologie des Kommunikationsnetzes von einem benachbarten Netzknoten übermittelt. Damit ist dem neuen Netzknoten die gesamte Topologie des Kommunikationsnetzes bekannt. Der neue Netzknoten übermittelt anschließend seinen Nachbarknoten seine Knotenkennung einschließlich der neuen Leitungsbündel. Die Nachbarknoten nehmen die Verteilung dieser Informationen nach dem oben angegebenen Verteilungsprinzip vor. Der neue hochlaufende Knoten ist damit im gesamten Kommunikationsnetz bekannt und wird in die Optimierungsberechnungen in den einzelnen Netzknoten einbezogen.

Bei der Verteilung der Rundsende-Nachrichten sendet die aktive Einheit SU-PM1 des jeweiligen Netzknotens diese Nachrichten auf den zu dem oben genannten "Broadcast Subgraph" gehörenden Leitungsbündeln aus.

Wie zuvor erwähnt, werden Ereignisse, die die Topologie des Netzwerkes ändern, vom jeweiligen Netzknoten selbst erkannt oder diesem mittels externer Kommunikation mitgeteilt. Daraufhin werden in dem jeweiligen Netzknoten Optimierungsberechnungen angestoßen, die zu einer Änderung der Wegesuchtabellen führen. In einem Netzknoten besitzen dabei alle Einheiten SU identische Wegesuchtabellen. Ergeben sich Änderungen in den Wegesuchtabellen, so sind diese zunächst nur in der aktiven Einheit SU-PM1 bekannt, da lediglich diese die Optimierungsberechnungen ausführt. Die Änderungen der Wegesuchtabellen werden dann innerhalb des jeweiligen Netzknotens den anderen Einheiten SU mitgeteilt.

Darüber hinaus werden in periodischen Zeitabstanden zwischen den Netzknoten Informationen bezüglich der Knotenzustände ausgetauscht und mit bereits vorliegenden Informationen verglichen, um bei einer Inkonsistenz eine entsprechende Anpassung vornehmen zu können.

Abschließend sei noch darauf hingewiesen, daß zwar vorstehend die vorliegende Erfindung am Beispiel eines paketvermittelnden Datennetzes erläutert worden ist. Diese ist jedoch in beliebigen Kommunikationsnetzen immer dann anwendbar, wenn in diesen ein adaptives Wegesuchverfahren durchgeführt werden soll.

## Patentansprüche

1. Verfahren zur adaptiven Wegesuche in einem eine Mehrzahl untereinander verbundene Netzknoten aufweisenden Kommunikationsnetz, in welchem in jedem der Netzknoten Netzdaten bezüglich der Netztopologie des gesamten Kommunikationsnetz geführt sind und nach Maßgabe dieser Netzdaten individuell Wegesuchtabellen für Verbindungswege zu sämtlichen verbleibenden, als Zielknoten in Frage kommenden Netzknoten nach festgelegten Optimierungs-Kriterien erstellt werden, wobei bei Auftreten eines die Netztopologie des Kommunikationsnetzes beeinflussenden Ereignisses durch den dieses Ereignis erkennenden Netzknoten einerseits die in diesem geführten Netzdaten aktualisiert werden und andererseits zu sämtlichen anderen Netzknoten hin eine dem Ereignis entsprechende, Rundsende-Nachricht übertragen wird, auf deren Empfang hin durch den jeweiligen Netzknoten eine Aktualisierung der in diesem geführten Netzdaten durchgeführt wird, und wobei für die Übertragung der Rundsende-Nachricht innerhalb des Kommunikationsnetzes aus der Vielzahl der möglichen Verbindungswege zwischen den einzelnen Netzknoten ein Verbindungswege-Netz festgelegt ist, über welches die Rundsende-Nachricht den jeweiligen Netzknoten über lediglich eine festgelegte Anzahl von unabhängigen Verbindungswegen erreicht.

2. Verfahren nach Anspruch 1,
**dadurch gekennzeichnet,**
daß die Rundsende-Nachricht dem jeweiligen Netzknoten lediglich über zwei unabhängige Verbindungswege zugeführt wird.

3. Verfahren nach Anspruch 1 oder 2,
**dadurch gekennzeichnet,**
daß eine Anpassung der in den einzelnen Netzknoten erstellten Wegesuchtabellen nach Maßgabe aktualisierter Netzdaten erst nach Ablauf einer festgelegten Zeitspanne erfolgt.

4. Verfahren nach einem der Ansprüche 1 bis 3,
**dadurch gekennzeichnet,**
daß bei einer Zustandsänderung einer Leitung eines Leitungsbündels, durch welche sich die Übertragungskapazität dieses Leitungsbündels ändert, eine Optimierung der Wegesuchtabellen lediglich dann erfolgt, wenn die Änderung einen bestimmten Schwellwert überschreitet.

5. Verfahren nach einem der Ansprüche 1 bis 4,
**dadurch gekennzeichnet,**
daß das adaptive Wegesuchverfahren lediglich bei einer Topologieänderung des Kommunikationsnetzes für eine Aktualisierung der Wegesuchtabellen benutzt wird, während für den Aufbau von Verbindungen innerhalb des Kommunikationsnetzes ein nicht-adaptives Wegesuchverfahren auf der Grundlage der adaptiv geänderten Wegesuchtabellen durchgeführt wird.
